# EUROPÄISCHE PATENTSCHRIFT

(11) **EP 1 977 404 B1**
(45) Veröffentlichungstag und Bekanntmachung des Hinweises auf die Patenterteilung: **04.12.2013**
(21) Anmeldenummer: 07721855.0
(22) Anmeldetag: 24.01.2007
(51) Int. Cl.: G01S 19/17, G08B 27/00

(54) **GLOBALES INFORMATIONS- UND RISIKOWARNSYSTEM UNTER VERWENDUNG VON SATELLITENNAVIGATIONSSYSTEMEN UND BENUTZERENDGERÄTEN**
GLOBAL INFORMATION AND HAZARD WARNING SYSTEM USING SATELLITE NAVIGATION SYSTEMS AND USER TERMINALS
SYSTÈME GLOBAL D'INFORMATION ET D'AVERTISSEMENT DE DANGER UTILISANT DES SYSTÈMES DE NAVIGATION PAR SATELLITE ET DES TERMINAUX D'UTILISATEUR

(30) Priorität: 26.01.2006 DE 102006003702
(43) Veröffentlichungstag der Anmeldung: 08.10.2008
(73) Patentinhaber: Astrium GmbH, 81663 München (DE)
(72) Erfinder: FLACHS, Detlef, 83714 Miesbach (DE); SCHÄFER, Christof, 85551 Kirchheim (DE)
(74) Vertreter: Hummel, Adam
(86) Internationale Anmeldenummer: PCT/DE2007/000118
(87) Internationale Veröffentlichungsnummer: WO 2007/085235

(56) Entgegenhaltungen:
- WO-A-02/49310
- WO-A-2004/044858
- US-B1- 6 297 766

## Beschreibung

Die Erfindung betrifft ein globales Informations- und Risikowarnsystem, welches auf Satellitennavigationssystemen und deren Benutzerendgeräten basiert.

Um Personen über bestehende Risiken in bestimmten, auch entfernt liegenden, begrenzten geographischen Regionen informieren zu können, besteht Bedarf an einem System, welches die Versendung von Warnmitteilungen und/oder allgemeinen Informationen an Menschen erlaubt, die sich in diesen geographischen Regionen befinden oder befinden werden. Um ein solches System effektiv verwenden zu können, muss es möglich sein möglichst viele Personen mittels des Systems zu erreichen und zwar innerhalb einer möglichst kurzen Zeitspanne.

Bestehende Satellitenkommunikationstechniken befriedigen diesen Bedarf nicht. Ein Nachteil dieser Technologie ist, dass sie derzeit nur einen beschränkten Benutzerkreis gefunden haben. Aufgrund der hohen Beschaffungs- und Betriebskosten (zum Beispiel Kosten für Kommunikation) steht zu erwarten, dass eine Verbreitung dieser Technologien auch in Zukunft nur im beschränkten Umfang erfolgen wird. Mit Hilfe der Satellitenkommunikation lässt sich folglich derzeit und auch zukünftig nur ein beschränkter Personenkreis erreichen. Ein weiterer Nachteil der Satellitenkommunikation ist, dass die geographische Auswahl einer bestimmten Untergruppe von Benutzerendgeräten durch das Satellitensystem selbst sichergestellt werden muss, was z.B. die Kenntnis der aktuellen Position des Benutzerendgeräts im Satellitensystem erfordert.

Darüber hinaus erfordern sowohl bestehende Satelliten-gestützte als auch bestehende und im Aufbau befindliche erdgebundene Verfahren der End-zu-End-Kommunikation die Kenntnis und die Identifikation aller zu erreichenden Benutzerendgeräte ebenso wie die zeitaufwendige, sequentielle Konfiguration der Anschlüsse zwischen dem System und den einzelnen Benutzerendgeräten. Ein weiterer Nachteil ist, dass die meisten der bestehenden Techniken erdgebundene Systeme sind, d.h. sie sind von einer existierenden und funktionierenden erdgebundenen Infrastruktur im Zielgebiet der Warnmitteilung abhängig.

Die Fachliteratur unterscheidet verschiedene Arten von Systemen. Terrestrische Mobilfunknetze bieten mit ihrer hohen Markdurchdringung eine gute Möglichkeit Informationen und Warnungen an Endgerätenutzer zu übermitteln. SMS und Cell-Broadcast sind dazu geeignet Nachrichten an viele Nutzer innerhalb einer Funkzelle gleichzeitig zu übermitteln. Nachteilig sind die zu erwartenden Netzausfälle durch Beschädigung der Infrastruktur bzw. Netzüberlastungen im Katastrophenfall. Eine globale Abdeckung wird mit dieser Technik nicht erreicht und ist auch nicht geplant. Küstennahe Gebiete und die offene See, Gebirge, aber auch dünn besiedelte Gebiete, werden zum Teil gar nicht abgedeckt.

Mobile Satellitenfunksysteme hingegen besetzen diese Nischen und bieten regionale und globale Abdeckung. Diese Systeme sind allerdings, wie die Erfahrung zeigt, für den Massenmarkt nicht tauglich. Das große Volumen und Gewicht der Endgeräte und die hohen Übertragungskosten verhindern dies.

Terrestrisches Fernsehen für portable Anwendungen lässt sich über DVB-T realisieren. Aber das Versorgungsgebiet ist ebenfalls nicht flächendeckend. Für mobile TV-Anwendungen etabliert sich der DVB-H Standard. Auch hier liegt keine vollständige Abdeckung vor und eine Positionsbestimmung des Endgerätes mittels DVB-T/-H Signalen ist nicht ohne weiteres möglich.

Terrestrische Rundfunksender, aber auch digitales Satellitenradio (z.B. Sirius, XM Satellite Radio) bieten ebenfalls eine Infrastruktur, die für Übermittlung von Warnungen geeignet ist. Diese Systeme sind allerdings auch nicht global implementiert und gestatten keine genaue Positionsbestimmung des Endgeräts.

Die US6,297,766B1 beschreibt ein tragbares Gerät zur Anzeige aktueller Wetterinformationen. Das Gerät weist einen GPS-Empfänger auf, mit welchem die aktuelle Position ermittelt werden kann. Wetterinformationen werden vom Gerät über einen speziellen Übertragungskanal von Basisstationen empfangen, die wiederum die Wetterinformationen von verschiedenen Quellen erhalten. Auch hier wird daher eine terrestrische Infrastruktur benötigt, um Wetterinformationen empfangen zu können.

Es ist eine Aufgabe der vorliegenden Erfindung ein Verfahren bereitzustellen, welches unabhängig von einer terrestrischen Infrastruktur zuverlässig funktioniert und Warnmitteilungen schnell, effektiv und mit einem hohen Bedeckungsgrad an eine Zielgruppe aussenden kann. Bei einer Zielgruppe handelt es sich um Personen, welche sich zu einem bestimmten Zeitpunkt oder innerhalb einer bestimmten Zeitspanne innerhalb eines vorgegebenen geographischen Gebiets befinden oder befinden werden.

Die Aufgabe wird gelöst durch ein Verfahren für ein globales Informations- und Frühwarnsystem, welches auf Satellitennavigationssystemen und Benutzerendgeräten basiert, umfassend die folgenden Schritte senden mindestens einer Warnmitteilung über ein oder mehrere Gefahrengebiete durch ein Satellitennavigationssystem an Benutzerendgeräte in mindestens einem Informationsbedeckungsgebiet, empfangen der mindestens einen Warnmitteilung durch ein Benutzerendgerät in dem mindestens einen Informationsbedeckungsgebiet und prüfen der Warnmitteilung durch das Benutzerendgerät, ob das Benutzerendgerät von der Warnmitteilung betroffen ist.

Die Aufgabe wird gelöst durch ein Verfahren, welches ferner den folgenden Schritt umfasst: entscheiden, dass das Benutzerendgerät von der Warnmitteilung betroffen ist, wenn sich mindestens eine Position des Benutzerendgeräts in einem der Gefahrengebiete der Warnmitteilung befindet.

Die Aufgabe wird gelöst durch ein Verfahren, welches ferner den folgenden Schritt umfasst: informieren des Benutzers des Benutzerendgeräts durch ein Warnsignal, dass eine Warnmitteilung empfangen wurde, wenn das Benutzerendgerät entschieden hat, dass das Benutzerendgerät von der Warnmitteilung betroffen ist.

Die Aufgabe wird gelöst durch ein Verfahren, wobei ferner das Warnsignal optischer, akustischer oder taktiler Art ist.

Die Aufgabe wird gelöst durch ein Verfahren, welches ferner der folgenden Schritt umfasst: mitteilen des Inhalts der Warnmitteilung an einen Benutzer des Benutzerendgeräts, wenn das Benutzerendgerät entschieden hat, dass das Benutzerendgerät von der Warnmitteilung betroffen ist.

Die Aufgabe wird gelöst durch ein Verfahren, welches ferner die folgenden Schritte umfasst: erfassen mindestens einer Gefahrensituation für mindestens ein Gefahrengebiet, ausgeben einer Warnung mit Informationen über die mindestens eine Gefahrensituation an Kontrollsysteme von Satellitennavigationssystemen und einfügen der Warnung als Warnmitteilung in Signale von Navigationssatelliten oder anderen sendenden Systeme der Satellitennavigationssysteme.

Die Aufgabe wird gelöst durch ein Verfahren, wobei ferner das Senden der mindestens einen Warnmitteilung durch Navigationssatelliten und/oder andere sendende Systeme der Satellitennavigationssysteme erfolgt.

Die Aufgabe wird gelöst durch ein Verfahren, wobei ferner einige oder alle der anderen sendenden Systeme der Satellitennavigationssysteme Pseudolites sind.

Die Aufgabe wird gelöst durch ein Verfahren, wobei ferner einige oder alle der senden Systeme der Satellitennavigationssysteme boden- und/oder raumgestützte Augmentierungssysteme oder Bestandteile solcher Augmentierungssysteme sind.

Die Aufgabe wird gelöst durch ein Verfahren, wobei ferner die Entscheidung, ob das Benutzerendgerät von der Warnmitteilung betroffen ist, automatisch durchgeführt wird.

Die Aufgabe wird gelöst durch ein Verfahren, wobei ferner die Entscheidung, ob das Benutzerendgerät von der Warnmitteilung betroffen ist, erst nach Freigabe durch einen Benutzer durchführt wird.

Die Aufgabe wird gelöst durch ein Verfahren, wobei ferner die Position des Benutzerendgeräts eine aktuelle und/oder mindestens eine zukünftige Position des Benutzerendgeräts ist.

Die Aufgabe wird gelöst durch ein Verfahren, wobei ferner die mindestens eine zukünftige Position eine geplante und/oder vorhergesagte Position ist.

Die Aufgabe wird gelöst durch ein Verfahren, wobei ferner die Warnmitteilung mindestens eine Kennung der Warnmitteilung und Daten zur Beschreibung mindestens eines Gefahrengebiets umfasst.

Die Aufgabe wird gelöst durch ein Verfahren, wobei ferner die Warnmitteilung mindestens ein freies Textfeld, mindestens einen Gültigkeitszeitpunkt, mindestens eine Gültigkeitszeitspanne, mindestens ein Aktivierungskennzeichen für zusätzliche Information, mindestens ein Aktivierungskennzeichen für Aktivitäten des Benutzerendgeräts und/oder mindestens eine Autorisierungsinformation umfasst.

Die Aufgabe wird gelöst durch ein Satellitennavigationssystem zur Durchführung eines globalen Informations- und Frühwarndienstes umfassend eine erste Einrichtung zum Senden mindestens einer Warnmitteilung über ein oder mehrere Gefahrengebiete und ein Benutzerendgerät für ein Satellitennavigations system umfassend eine erste Einrichtung zum Empfangen mindestens einer Warnmitteilung in mindestens einem Informationsbedeckungsgebiet und eine zweite Einrichtung zum Prüfen der mindestens einen empfangenen Warnmitteilung, ob das Benutzerendgerät von der Warnmitteilung betroffen ist.

Weitere vorteilhafte Ausgestaltungen der Erfindung ergeben sich aus der Figurenbeschreibung der Erfindung.

Ein Vorteil des erfindungsgemäßen Verfahrens ist die Ausnutzung des hohen Bedeckungsgrads vorhandener Satellitennavigationssysteme für die Übertragung der Warnmitteilungen. Zusammen mit der weiten Verbreitung der vorhandenen Benutzerendgeräte für Satellitennavigationssysteme lassen sich viele Interessenten durch Warnmitteilungen erreichen. Durch die globale Bedeckung, die von Satellitennavigationssystemen erreicht wird, können auch wenig besiedelte Gebiete erreicht werden, z.B. auch auf See, in den Bergen und in wenig entwickelten Regionen in denen es keine Versorgung z.B. mit mobilen Telefonnetzwerken gibt. Ein weiterer Vorteil des erfindungsgemäßen Verfahrens ist es, dass für dessen Nutzung die Übertragungskapazitäten vorhandener und geplanter Satellitennavigationssysteme ausreichen, d.h. die vorhandenen Kapazitäten müssen nicht erhöht werden. Dies wird durch die Beschränkung des erfindungsgemäßen Verfahrens auf das reine Aussenden kurzer, gegebenenfalls standardisierter, Mitteilungen erreicht.

Ein weiterer Vorteil des erfindungsgemäßen Verfahrens ist es, dass durch die Nutzung der Kommunikationsmöglichkeiten vorhandener und geplanter Satellitennavigationssysteme die zuverlässige Funktion des Verfahrens unabhängig von einer terrestrischen Infrastruktur ermöglicht wird. Dadurch können schnell und effektiv Warnmitteilungen ausgesendet werden. Die für das Satellitennavigationssystem nötige terrestrische Infrastruktur ist i.d.R. global verteilt und weißt einen hohen Redundanzgrad auf, der zum unterbrechungsfreien Betrieb des Systems für Positionierungszwecke gefordert ist. Das hat zur Folge, dass die benötigte terrestrische Infrastruktur, z.B. im Gegensatz zum lokal strukturierten Aufbau eines Mobilkommunikationssystems, unanfällig gegen lokal und regional begrenzte Störungen, Ausfälle und Einwirkungen ist.

Die Nutzung der Kommunikationsmöglichkeiten vorhandener und geplanter Satellitennavigationssysteme bringt ferner den Vorteil der weltweiten Verfügbarkeit unabhängig von existierenden terrestrischen Kommunikationsinfrastrukturen. Die Auslegung von Satellitennavigationssystemen muss außerdem den Mindestanforderungen zur Positionsbestimmung Rechnung tragen, d.h. dass an jedem Punkt der Erde zu jedem Zeitpunkt mindestens vier Satelliten sichtbar sein müssen. Diese Designanforderung stellt einen hohen Überdeckungs- und Redundanzgrad für ein auf Satellitennavigationssystemen basierendes Warnsystem dar, der auch in Umgebungen mit erschwerten Empfangsbedingungen eine nötige Mindestverfügbarkeit sicherstellt.

Durch die Kombination vorhandener Satellitennavigationssysteme mit vorhandenen Benutzerendgeräten wird existierende Technik verwendet, welche sofort genutzt werden kann, ohne dass dem Betreiber oder den Benutzern zusätzliche Kosten verursacht werden.

Durch die Verwendung massenmarktorientierter Benutzerausrüstung, insbesondere hinsichtlich Größe, Gewicht, Preis und Komplexität in der Verwendung, wird ein hoher Grad von Durchdringung des Massenmarkts sichergestellt.

Gleichzeitig existiert bereits eine Vielzahl von professionellen Anwendungen der Satellitennavigation, die eine hohe Durchdringung professioneller und behördlicher Anwendergruppen zur Folge haben. Dies hat den Vorteil, dass auch in Gegenden, in denen die Bevölkerung auf Grund Ihrer sozialen und wirtschaftlichen Situation i.d.R. nicht in großem Umfang über technische Geräte verfügt, entsprechende Empfangsgeräte zumindest bei im Katastrophenfall für die Koordination zuständigen staatlichen Stellen verfügbar sind. Ein Empfang der Warnmitteilungen und die Möglichkeit entsprechender Reaktionen in den betroffenen Gebieten wird damit ermöglicht.

Ein weiterer Vorteil des erfindungsgemäßen Verfahrens ist es, dass die Entscheidung, ob der Benutzer eines Endgeräts von einer Warnmitteilung betroffen ist, in das Benutzerendgerät verlagert wird. Mittels der mitübertragenen Informationen über die geographische und zeitliche Relevanz der Warnmitteilung und die im Endgerät bestimmte aktuelle Position bzw. geplanten zukünftigen Position kann das Benutzerendgerät die Relevanz der empfangenen Information für den Benutzer des Endgeräts überprüfen. Das Benutzerendgerät trifft autonom, basierend auf seiner aktuellen oder seiner geplanten zukünftigen Position die Entscheidung. Eine Übermittlung der Warnmitteilungen findet dann lediglich an die Personen der Zielgruppe der Warnmitteilungen statt, d.h. die Personen, die sich zu einem bestimmten Zeitpunkt oder einer bestimmten Zeitspanne innerhalb eines vorgegebenen geographischen Gebiets, für das eine Warnmitteilung ausgesendet wird, befinden bzw. befinden werden.

Dadurch ergibt sich durch die Erfindung ferner ein Schutz der Privatsphäre des Benutzers, da durch die autonome Entscheidung des Benutzerendgeräts eine dynamische Zuordnung bzw. Verfolgung der Benutzers nicht erforderlich ist. Es besteht für das System keine Notwendigkeit zu wissen, welche Benutzerendgeräte sich zu einem bestimmten Zeitpunkt innerhalb des Gefahrengebiets befinden in dem die Warnmitteilungen verteilt werden sollen. Die Notwendigkeit alle betroffenen Endgeräte im Detail identifiziert haben zu müssen, um sie dann direkt ansprechen zu können, entfällt.

Das erfindungsgemäße Verfahren basiert auf der Nutzung der Satellitennavigationsnachricht zur Verbreitung der Warnmitteilungen und der Informationen zur geographischen und ggf. zeitlichen Gültigkeit der Warnmitteilung. Die Endgeräte müssen zur Nutzung des Warndienstes nur über die Möglichkeit verfügen, Satellitennavigationsnachrichten zu empfangen, zu verarbeiten und auszuwerten, sowie über Positionierungsfähigkeit verfügen. Die Positionierung erfolgt dabei idealerweise ebenfalls über Satellitennavigation, kann aber auch durch andere Verfahren und Techniken ergänzt werden oder ausschließlich auf solchen basieren. Eine dedizierte Kommunikationskomponente im Endgerät dagegen ist nicht zwingend notwendig. Auch bei der Verwendung hybrider Endgeräte (Endgeräte mit Kommunikations- und Positionierungskomponente) arbeitet die Lösung unabhängig von der Nutzung und dem Betrieb einzelner Kommunikationssysteme, Kommunikationsnetze und Kommunikationsdienste systemübergreifend.

Damit besteht eine effektive, schnelle und kostengünstige Möglichkeit Endgeräten in einem bestimmten räumlich begrenzten Gebiet Informationen mit geringem Datenvolumen zukommen zu lassen.

Weitere Vorteile ergeben sich aus der erwarteten hohen Verbreitung von Satellitennavigationsendgeräten durch Einbringung solcher Geräte in mobile Telefone. Ein solcher Trend wurde durch verschiedene Unternehmen begonnen und es wird erwartet, dass dies ein Quasistandard für den Mobilfunkmarkt wird.

Das erfindungsgemäße Verfahren basiert auf verschiedenen Kapazitäten von Satellitennavigationssignalen. Dazu gehört unter anderen Möglichkeiten die Informationsübermittlung in freigehaltenen Bereichen der Navigationsmitteilungen selbst.
- Figur 1: zeigt ein Beispiel für ein globales Gefahrenfrühwarnsystem
- Figur 2: zeigt eine mögliche Grundstruktur für eine Warnmitteilung
- Figur 3: zeigt eine mögliche erweiterte Struktur für eine Warnmitteilung

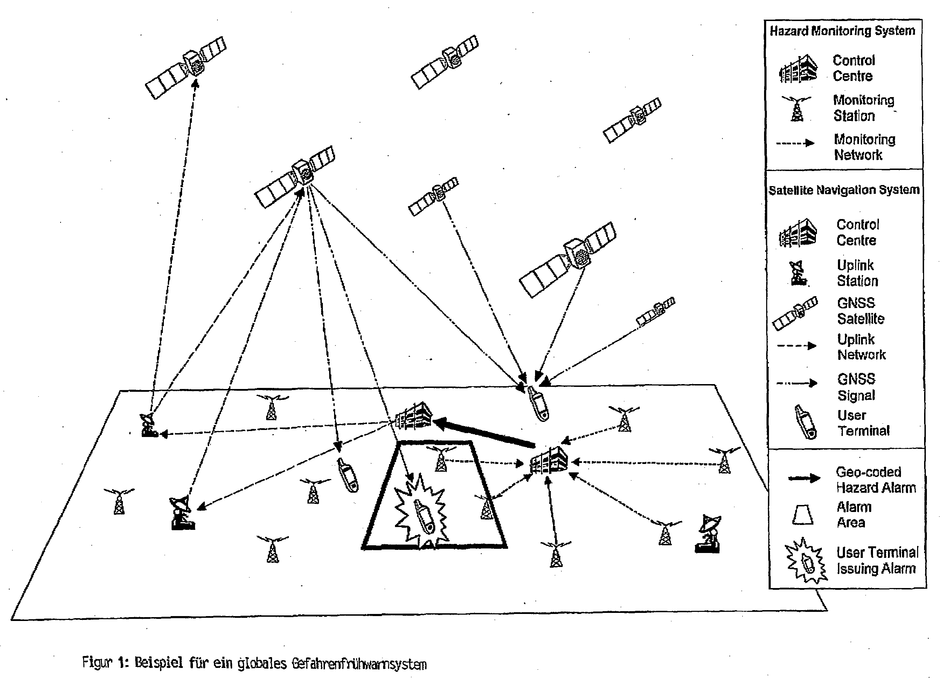

Im Folgenden wird die Erfindung unter Verwendung der Fig. 1 bis 3 beschrieben.

Fig. 1 zeigt beispielhaft ein globales Gefahrenfrühwarnsystem, welches auf einem Satellitennavigationssystem basiert und mit dessen Hilfe das erfindungsgemäße Verfahren betrieben werden kann.

Gemäß einer Ausführungsform der vorliegenden Erfindung erfassen Überwachungssysteme eine Gefahrensituation für ein bestimmtes Gebiet (zum Beispiel sensorisch im Falle von Naturkatastrophen oder durch Lagebeurteilung im Falle von Unruhen oder sonstigen politischen Gefahren oder auch Umweltkatastrophen).

Anschließend geben die betroffenen Überwachungssysteme eine Warnung mit entsprechenden Informationen an ein Kontrollzentrum eines oder mehrerer Satellitennavigationssysteme ab. Die Warnungen mit entsprechenden Informationen des Überwachungssystems werden Navigationssatelliten oder anderen sendenden Systemen eines Satellitennavigationssystems (z.B. Pseudolites) über die regulären Empfangskanäle des Satellitennavigationssystems zugeführt. Diese Warnungen mit entsprechenden Informationen werden als Warnmitteilung in ein entsprechendes Signal des Satellitennavigationssystems eingefügt, durch das Satellitennavigationssystem abgestrahlt und dadurch von Navigationssatelliten oder anderen sendenden Systemen (z.B. Pseudolite) der betroffenen Satellitenkonstellationen allen erreichbaren Benutzerendgeräten zugeführt.

Die Warnmitteilungen werden je nach Möglichkeiten des genutzten Satellitennavigationssystems entweder in einen freien Einschub (Slot) eines Navigationssignals (Navigationsmeldung) eingefügt oder in entsprechend dafür vorgesehene Kommunikationsmitteilungen, welche durch spezifische Signale zur Verfügung gestellt werden.

Für die vorliegende Erfindung werden verschiedene Arten von geographischen Gebieten, nämlich Gefahrengebiete und Informationsbedeckungsgebiete, unterschieden. Ein Gefahrengebiet für Warnmitteilungen ist ein geographisches Gebiet, für weiches erwartet wird, dass es durch Gefahrenereignisse beeinträchtigt wird. Die Gefahrengebiete werden zum Beispiel durch die oben genannten Überwachungssysteme dem Kontrollzentrum des Satellitennavigationssystems mitgeteilt. Ein Informationsbedeckungsgebiet für Warnmitteilungen ist ein geographisches Gebiet, in welches die Warnmitteilungen abgestrahlt werden. Die Informationsbedeckungsgebiete werden durch die Bedeckung der Satellitenkonstellationen festgelegt. Zum Beispiel könnten Warnmitteilungen an Zielgruppen in einem Informationsbedeckungsgebiet in Europa über ein Gefahrengebiet in Afrika übermittelt werden.

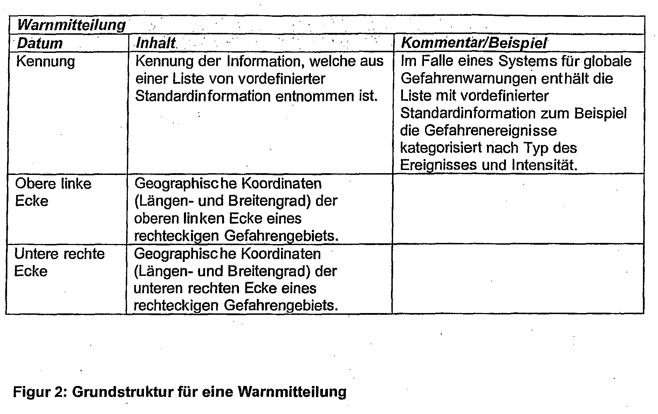

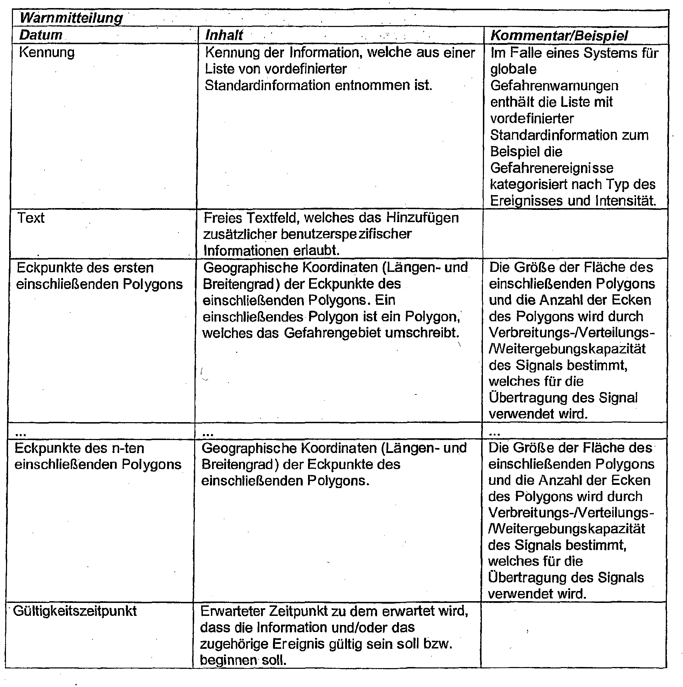

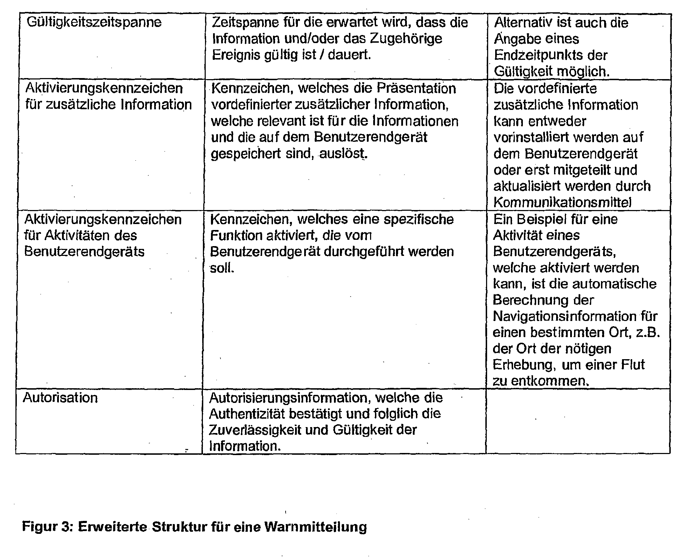

Die Gefahrengebiete werden als Teil der Warnmitteilungen an die Benutzerendgeräte in den Informationsbedeckungsgebieten übermittelt (siehe Fig. 2 und 3). Gefahrengebiete können dabei beliebige geometrische Formen annehmen und aus einem oder mehreren zusammenhängenden geographischen Gebieten bestehen.

In der Regel wird das Informationsbedeckungsgebiet für Warnmitteilungen mindestens das zugehörige Gefahrengebiet der Warnmitteilungen ganz umfassen. In diesem Fall wären die Warnmitteilungen von allen Personen, welche mit einem Benutzerendgerät ausgestattet sind und sich innerhalb des Gefahrengebiets befinden, zu empfangen.

Gemäß der Erfindung können sich Informationsbedeckungsgebiete und Gefahrengebiete aber auch überschneiden oder völlig getrennte geographische Gebiete sein. In diesem Falle wären Warnmitteilungen auch von Personen, welche mit einem Benutzerendgerät ausgestattet sind und sich außerhalb des Gefahrengebiets befinden, zu empfangen. Solche Warnmitteilungen können zum Beispiel für Personen von Bedeutung sein, die planen in das Gefahrengebiet zu reisen oder sich auch nur für dieses Gebiet generell interessieren und sich darüber informieren wollen.

Idealerweise wird das Informationsbedeckungsgebiet das Gefahrengebiet in einer Form einschließen, dass Personen mit eingeschlossen sind, die sich in einer Umgebung um das Gefahrengebiet befinden, in der anzunehmen ist, dass sie, wenn geplant, das Gefahrengebiet während der Dauer der Gefahr erreichen können.

Nach Empfang einer Warnmitteilung prüft ein Benutzerendgerät, ob es durch die empfangene Warnmitteilung betroffen ist. Diese Prüfung ist durch den Benutzer des Endgeräts manuell einstellbar und erfolgt entweder sofort automatisch oder zu einem vom Benutzer festgelegten Zeitpunkt oder wird unterdrückt.

Dazu fragt das Benutzerendgerät entweder seine aktuelle Position bei Empfang der Warnmitteilung mit Hilfe der Mittel der Satellitennavigation automatisch ab oder greift auf eine abgespeicherte Position zurück. Diese beiden Optionen sind vom Benutzer des Endgeräts manuell einstellbar. Beispielsweise kann der Benutzer in Zeiten großer Positionsveränderungen (zum Beispiel bei Fortbewegung mit einem Flugzeug) die erste Option wählen und in Zeiten geringer oder keiner Positionsveränderungen die zweite Option. Die zweite Option ermöglicht zusätzlich den Empfang von relevanten Warnmitteilungen im Falle einer voreingestellten Route von zukünftigen geplanten Positionen (Navigation) bzw. eine generelle Information über ein Interessensgebiet, jedoch ohne die konkrete Planung sich dort direkt aufzuhalten.

Liegt die aktuelle Position oder eine abgespeicherte Position innerhalb des Gefahrengebiets informiert das Endgerät den Benutzer über die empfangene Warnmitteilung. Dies kann auf verschiedene Arten geschehen. Zum Beispiel optisch, durch Anzeige der Warnmitteilung auf dem Bildschirm (Display) des Benutzerendgeräts oder akustisch, durch Sprachausgabe, oder durch eine geeignete Kombination. Der Anzeige der Warnmitteilung kann ein entsprechendes Warnsignal vorangehen, welches dem Benutzer den Empfang einer Warnmitteilung anzeigt, zum Beispiel optisch, durch farbliche Veränderung oder Blinken des Bildschirms, akustisch, durch ein vorgegebenes Warnsignal und/oder taktil, durch ein Vibrationssignal. Die Anzeige der Warnmitteilung kann auch zusätzliche, im Endgerät vorgespeicherte Informationen enthalten und/oder die Aktivierung einer spezifischen Funktion des Benutzerendgeräts (z.B. Festlegung der Route für vorgegebene und/oder vordefinierte Zielpunkte/-gebiete) umfassen. Diese verschiedenen Optionen sind vom Benutzer manuell einstellbar.

In einer weiteren Ausführungsform verwendet das Benutzerendgerät bei seiner Prüfung, ob es durch die empfangene Warnmitteilung betroffen ist, eine oder mehrere zukünftige Positionen. Zukünftige Positionen können zusammen mit der aktuellen Position oder anstatt der aktuellen Position verwendet werden. Diese Optionen sind durch den Benutzer manuell einstellbar.

Zukünftige Positionen sind dabei entweder geplante Positionen oder geschätzte oder vorhergesagte Positionen. Geplante Positionen werden dem Endgerät durch den Benutzer eingegeben und betreffen zum Beispiel eine geplante Route für vorgegebene und/oder vordefinierte Zielpunkte oder Zielgebiete. Die Route kann dabei mit Zeitangaben versehen sein, welche angeben, zu welcher Zeit es geplant ist einen Routenpunkt zu erreichen. Geschätzte oder vorhergesagte Positionen ergeben sich aufgrund einer Schätzung des Benutzerendgeräts zum Beispiel aus abgespeicherten früheren aktuellen Positionen des Endgeräts und/oder aus einem abgespeicherten geplanten Kurs (Navigations- oder Führungsmodus).

Die zukünftigen Positionen des Navigations- oder Führungsmodus sind dabei durch einen Navigations- und Führungsprozess gegeben, welcher die Positionen, in einer vom Benutzer des Endgeräts zu bestimmenden Feinheit, aufgrund eines vom Benutzer eingegebenen Plans oder aufgrund eines vom Benutzer ausgewählten Schätzverfahrens festlegt.

In einer weiteren Ausführungsform verwendet das Benutzerendgerät bei seiner Prüfung, ob es durch die empfangene Warnmitteilung betroffen ist, zusätzlich zu der aktuellen Position und/oder zukünftiger Positionen eine Gültigkeitszeitspanne, welche in der Warnmitteilung enthalten ist. Eine Gültigkeitszeitspanne gibt den Zeitraum an für welchen die Warnmitteilung gültig ist. Sollten zum Beispiel die Punkte einer Route im Gefahrengebiet laut Routenplanung nicht innerhalb der Gültigkeitszeitspanne erreicht werden, kann das Endgerät entscheiden, dass es von der Warnmitteilung nicht betroffen ist. Eine weitere Möglichkeit betrifft die Verwendung der aktuellen Position. Hier wird die Warnmitteilung nur dann an den Benutzer mitgeteilt, wenn die aktuelle Position innerhalb der Gültigkeitszeitspanne innerhalb des Gefahrengebiets liegt. Warnmitteilungen können sich auch auf zukünftige Gefahrenereignisse beziehen. Diese Optionen sind durch den Benutzer manuell einstellbar. Die Verwendung einer Gültigkeitszeitspanne für die Warnmeldung ermöglicht außerdem für Benutzer, die sich zwar zum Gültigkeitszeitraum nicht innerhalb des Gefahrengebiets befinden oder befinden werden, aber deren Routenplanung sie kurz nach der Beendigung des akuten Gefahrensereignisses durch dieses Gebiet führen wird, die Route entsprechend zu ändern um die Folgen des Ereignisses, z.B. Zerstörungen, zu umgehen.

Besagt eine gespeichert und/oder geschätzte zukünftige Position, dass sich der Nutzer während der Gültigkeitszeitspanne bereits wieder außerhalb des Gefahrengebiets befinden wird, kann die Warnmeldung trotzdem erfolgen um sicherzustellen, dass der Nutzer nicht durch Änderung seiner Pläne trotzdem von der Gefahr betroffen wird. Eine solche Meldung kann auch unterdrückt werden. Auch diese Option ist ist durch den Benutzer manuell einstellbar.

In einer weiteren Ausführungsform umfasst das Satellitennavigationssystem zusätzlich die Funktion die Verbreitung der Warnmitteilungen auf bestimmte ausgewählte Satelliten zu begrenzen und damit die Informationsbedeckungsgebiete einer Warnmitteilung unterschiedlich festzulegen. Die Informationsbedeckungsgebiete werden dabei von den Überwachungssystemen festgelegt.

In einer weiteren Ausführungsform wird ein hybrides Benutzerendgerät verwendet, welches die Funktionalität der Satellitennavigation mit der Funktionalität der Satellitenkommunikation verbindet. Dies erlaubt optional auch die Übertragung größerer Datenmengen zur Ergänzung der reinen Warnmitteilung um Zusatzinformationen.

Die Erfindung umfasst auch die Datenstrukturen der Warnmitteilungen. Die Fig. 2 und 3 zeigen beispielhaft zwei mögliche Strukturen für Warnmitteilungen. Fig. 2 zeigt ein Beispiel für eine Grundstruktur einer Warnmitteilung und Fig. 3 ein Beispiel für eine erweiterte Struktur einer Warnmitteilung.

Fig. 2 zeigt ein Beispiel für eine Grundstruktur einer Warnmitteilung, d.h. eine Warnmitteilung, welche einen geringen Informationsinhalt überträgt. Das Gefahrengebiet der Warnmitteilung wird im Falle dieser Warnmitteilung durch eine einfache geometrische Figur begrenzt. Beispielhaft ist der Fall eines Rechtecks angegeben. Ebenso kann aber jede andere einfache geometrische Figur verwendet werden, d.h. jede Figur, welche sich durch wenige Daten beschreiben lässt. Der Informationsgehalt der Warnmitteilung wird dabei auf eine eindeutige Kennung beschränkt, welche das Ereignis angibt auf welches sich die Warnung bezieht.

Fig. 3 zeigt ein Beispiel für eine erweiterte Struktur einer Warnmitteilung. In diesem Falle lässt sich das Gefahrengebiet der Warnmitteilung frei durch ein oder mehrere Polygone definieren durch Angaben von Ecken und Kanten für diese Polygone (z.B. Rechtecke, Kreise, Polygone oder eine Kombination solcher Figuren). Zusätzlich steht ein erweiterter Informationsinhalt zur Verfügung. Neben dem erwarteten Zeitpunkt zu dem das Gefahrenereignis eintreten wird, wird eine Gültigkeitszeitspanne mitgeteilt, welche angibt wie lange das zugehörige Gefahrenereignis dauert. Ferner gibt es ein Aktivierungskennzeichen für zusätzliche Informationen, welches die Präsentation vordefinierter zusätzlicher Informationen, die im Falle des ausgesendeten Warnungstyps relevant sind und die auf dem Benutzerendgerät gespeichert sind, ermöglicht und auslöst. Darüber hinaus gibt es ein Aktivierungskennzeichen für das Benutzerendgerät, welches spezifische Funktionen aktiviert, die vom Benutzerendgerät durchgeführt werden sollen (z.B. im Falle drohender Überflutungen die Bestimmung des kürzesten Weges zu höher gelegenen Geländepunkten). Der Autorisierungsschlüssel bestätigt die Authentizität des Senders und somit die Zuverlässigkeit der mitgeteilten Informationen.

Der angegebene Informationsinhalt dient nur als ein Beispiel für eine erweiterte Warnmitteilung. Der Erfindungsgedanke ist nicht darauf beschränkt. Es können noch weitere Informationen angegeben werden; z.B. ist die Angabe einer zusätzlichen Zeitspanne möglich, welche angibt wie lange das Gefahrenereignis das Gefahrengebiet beeinträchtigen wird. Auch sind Kombinationen und Untermengen des angegebenen Informationsgehalts möglich.

Die Auswahl eines Inhalts für die Warnmitteilung hat einen beträchtlichen Einfluss auf das Datenvolumen, welches übertragen werden muss.

Durch die Art der Warnmitteilung und die Überdeckungs- und Verfügbarkeitsanforderungen an Satellitennavigationssysteme sind Zeitspannen von 10 bis 20 sec für den Empfang von vollständigen Warnmitteilungen akzeptabel. Folglich lässt sich die Erfindung auch auf solchen Systemen verwirklichen, die lediglich über geringe Kapazitäten für die Datenübertragung verfügen. Somit lässt sich die Erfindung insbesondere durch die Einfügung von Warnmitteilungen in Navigationssignalen von Satellitennavigationssystemen verwirklichen.

Die oben beschriebenen Ausführungsformen ergänzen sich in der Weise, dass sie beliebig miteinander kombinierbar sind. Deswegen sind auch beliebige Kombinationen der oben beschriebenen Aufführungsformen Teil der Offenbarung der Erfindung und als Ausführungsformen der Erfindung zu verstehen.

Weiterhin werden offenbart Benutzerendgeräte für Satellitennavigationssysteme, welche zur Durchführung der Verfahren gemäß obiger Ausführungsformen eingerichtet sind.

Darüber hinaus werden Satellitennavigationssysteme zur Durchführung eines globalen Informations- und Frühwarndienstes offenbart, welche zur Durchführung der Verfahren gemäß obiger Ausführungsformen eingerichtet sind und ein Benutzerendgerät gemäß vorliegender Erfindung umfassen.

## Patentansprüche

1. Verfahren für ein globales Informations- und Frühwarnsystem, welches auf Satellitennavigationssystemen und Benutzerendgeräten basiert, umfassend die folgenden Schritte
senden mindestens einer Warnmitteilung über ein oder mehrere Gefahrengebiete durch ein Satellitennavigationssystem an Benutzerendgeräte in mindestens einem Informationsbedeckungsgebiet,
empfangen der mindestens einen Warnmitteilung durch ein Benutzerendgerät in dem mindestens einen Informationsbedeckungsgebiet und
prüfen der Warnmitteilung durch das Benutzerendgerät, ob das Benutzerendgerät von der Warnmitteilung betroffen ist.

2. Ein Verfahren nach Anspruch 1 **dadurch gekennzeichnet, dass** das Verfahren ferner den folgenden Schritt umfasst
entscheiden, dass das Benutzerendgerät von der Warnmitteilung betroffen ist, wenn sich mindestens eine Position des Benutzerendgeräts in einem der Gefahrengebiete der Warnmitteilung befindet.

3. Ein Verfahren nach Anspruch 2 **dadurch gekennzeichnet, dass** das Verfahren ferner den folgenden Schritt umfasst
informieren des Benutzers des Benutzerendgeräts durch ein Warnsignal, dass eine Warnmitteilung empfangen wurde, wenn das Benutzerendgerät entschieden hat, dass das Benutzerendgerät von der Warnmitteilung betroffen ist.

4. Ein Verfahren nach Anspruch 3, wobei das Warnsignal optischer, akustischer oder taktiler Art ist.

5. Ein Verfahren nach einem der Ansprüche 1 bis 4 **dadurch gekennzeichnet, dass** das Verfahren ferner den folgenden Schritt umfasst
mitteilen des Inhalts der Warnmitteilung an einen Benutzer des Benutzerendgeräts, wenn das Benutzerendgerät entschieden hat, dass das Benutzerendgerät von der Warnmitteilung betroffen ist.

6. Ein Verfahren nach einem der Ansprüche 1 bis 5 **dadurch gekennzeichnet, dass** das Verfahren ferner die folgenden Schritte umfasst
erfassen mindestens einer Gefahrensituation für mindestens ein Gefahrengebiet,
ausgeben einer Warnung mit Informationen über die mindestens eine Gefahrensituation an Kontrollsysteme von Satellitennavigationssystemen,
einfügen der Warnung als Warnmitteilung in Signale von Navigationssatelliten oder anderen sendenden Systeme der Satellitennavigationssysteme.

7. Ein Verfahren nach einem der Ansprüche 1 bis 6 **dadurch gekennzeichnet, dass** das Senden der mindestens einen Warnmitteilung durch Navigationssatelliten und/oder andere sendende Systeme der Satellitennavigationssysteme erfolgt.

8. Ein Verfahren nach Anspruch 7 **dadurch gekennzeichnet, dass** einige oder alle der anderen sendenden Systeme der Satellitennavigationssysteme Pseudolites sind.

9. Ein Verfahren nach Anspruch 7 **dadurch gekennzeichnet, dass** einige oder alle der senden Systeme der Satellitennavigationssysteme boden- und/oder raumgestützte Augmentierungssysteme oder Bestandteile solcher Augmentierungssysteme sind.

10. Ein Verfahren nach einem der Ansprüche 2 bis 9 **dadurch gekennzeichnet, dass** die Entscheidung, ob das Benutzerendgerät von der Warnmitteilung betroffen ist, automatisch durchgeführt wird.

11. Ein Verfahren nach einem der Ansprüche 2 bis 9 **dadurch gekennzeichnet, dass** die Entscheidung, ob das Benutzerendgerät von der Warnmitteilung betroffen ist, erst nach Freigabe durch einen Benutzer durchführt wird.

12. Ein Verfahren nach einem der Ansprüche 2 bis 11 **dadurch gekennzeichnet, dass** die Position des Benutzerendgeräts eine aktuelle und/oder mindestens eine zukünftige Position des Benutzerendgeräts ist.

13. Ein Verfahren nach Anspruch 12 **dadurch gekennzeichnet, dass** die mindestens eine zukünftige Position eine geplante und/oder vorhergesagte Position ist.

14. Ein Verfahren nach einem der Ansprüche 1 bis 13 **dadurch gekennzeichnet, dass** die Warnmitteilung mindestens eine Kennung der Warnmitteilung und Daten zur Beschreibung mindestens eines Gefahrengebiets umfasst.

15. Ein Verfahren nach Anspruch 14 **dadurch gekennzeichnet, dass** die Warnmitteilung mindestens ein freies Textfeld, mindestens einen Gültigkeitszeitpunkt, mindestens eine Gültigkeitszeitspanne, mindestens ein Aktivierungskennzeichen für zusätzliche Information, mindestens ein Aktivierungskennzeichen für Aktivitäten des Benutzerendgeräts und/oder mindestens eine Autorisierungsinformation umfasst.

16. Satellitennavigationssystem zur Durchführung eines globalen Informations- und Frühwarndienstes umfassend
eine erste Einrichtung zum Senden mindestens einer Warnmitteilung über ein oder mehrere Gefahrengebiete durch das Satellitennavigationssystem und
ein Benutzerendgerät umfassend
eine erste Einrichtung zum Empfangen mindestens einer Warnmitteilung in mindestens einem Informationsbedeckungsgebiet von dem Satellitennavigationssystem und
eine zweite Einrichtung zum Prüfen der mindestens einen empfangenen Warnmitteilung, ob das Benutzerendgerät von der Warnmitteilung betroffen ist.

## Claims

1. Method for a global information and early warning system that is based on satellite navigation systems and user terminals, comprising the following steps:
at least one warning notification about one or more hazard areas is sent by a satellite navigation system to user terminals in at least one information coverage area,
the at least one warning notification is received by a user terminal in the at least one information coverage area, and
the warning notification is checked by the user terminal to determine whether the user terminal is affected by the warning notification.

2. Method according to Claim 1, **characterized in that** the method also comprises the following step:
a decision is made that the user terminal is affected by the warning notification if at least one position of the user terminal is situated in one of the hazard areas of the warning notification.

3. Method according to Claim 2, **characterized in that** the method also comprises the following step:
the user of the user terminal is informed by a warning signal that a warning notification has been received when the user terminal has decided that the user terminal is affected by the warning notification.

4. Method according to Claim 3, wherein the warning signal is of visual, audible or tactile type.

5. Method according to one of Claims 1 to 4, **characterized in that** the method also comprises the following step:
a user of the user terminal is notified of the content of the warning notification when the user terminal has decided that the user terminal is affected by the warning notification.

6. Method according to one of Claims 1 to 5, **characterized in that** the method also comprises the following steps:
at least one hazard situation is detected for at least one hazard area,
a warning containing information about the at least one hazard situation is issued to control systems of satellite navigation systems,
the warning is inserted as a warning notification into signals from navigation satellites or other sending systems of the satellite navigation systems.

7. Method according to one of Claims 1 to 6, **characterized in that** the at least one warning notification is sent by navigation satellites and/or other sending systems of the satellite navigation systems.

8. Method according to Claim 7, **characterized in that** some or all of the other sending systems of the satellite navigation systems are pseudolites.

9. Method according to Claim 7, **characterized in that** some or all of the sending systems of the satellite navigation systems are ground-based and/or space-based augmentation systems or parts of such augmentation systems.

10. Method according to one of Claims 2 to 9, **characterized in that** the decision regarding whether the user terminal is affected by the warning notification is made automatically.

11. Method according to one of Claims 2 to 9, **characterized in that** the decision regarding whether the user terminal is affected by the warning notification is made only after clearance by a user.

12. Method according to one of Claims 2 to 11, **characterized in that** the position of the user terminal is a current and/or at least one future position of the user terminal.

13. Method according to Claim 12, **characterized in that** the at least one future position is a planned and/or predicted position.

14. Method according to one of Claims 1 to 13, **characterized in that** the warning notification comprises at least one identifier for the warning notification and data for describing at least one hazard area.

15. Method according to Claim 14, **characterized in that** the warning notification comprises at least one free text box, at least one validity time, at least one validity period, at least one activation indicator for additional information, at least one activation indicator for activities of the user terminal and/or at least one piece of authorization information.

16. Satellite navigation system for performing a global information and early warning service comprising
a first device for the sending of at least one warning notification about one or more hazard areas by the satellite navigation system and
a user terminal comprising
a first device for receiving at least one warning notification in at least one information coverage area from the satellite navigation system and
a second device for checking the at least one received warning notification to determine whether the user terminal is affected by the warning notification.

## Revendications

1. Procédé pour un système global d'information et d'alerte anticipée, lequel se base sur des systèmes de navigation par satellite et des terminaux d'utilisateur, comprenant les étapes suivantes :
envoi d'au moins une notification d'alerte sur une ou plusieurs zones de danger par un système de navigation par satellite à des terminaux d'utilisateur dans au moins une zone de couverture d'information,
réception de l'au moins une notification d'alerte par un terminal d'utilisateur dans l'au moins une zone de couverture d'information et
contrôle de la notification d'alerte par le terminal d'utilisateur pour vérifier si le terminal d'utilisateur est concerné par la notification d'alerte.

2. Procédé selon la revendication 1, **caractérisé en ce que** le procédé comprend en outre l'étape suivante :
décision du fait que le terminal d'utilisateur est concerné par la notification d'alerte lorsqu'au moins une position du terminal d'utilisateur se trouve dans l'une des zones de danger de la notification d'alerte.

3. Procédé selon la revendication 2, **caractérisé en ce que** le procédé comprend en outre l'étape suivante :
information de l'utilisateur du terminal d'utilisateur par un signal d'alerte qu'une notification d'alerte a été reçue lorsque le terminal d'utilisateur a décidé que le terminal d'utilisateur est concerné par la notification d'alerte.

4. Procédé selon la revendication 3, selon lequel le signal d'alerte est de nature optique, sonore ou tactile.

5. Procédé selon l'une des revendications 1 à 4, **caractérisé en ce que** le procédé comprend en outre l'étape suivante :
communication du contenu de la notification d'alerte à un utilisateur du terminal d'utilisateur lorsque le terminal d'utilisateur a décidé que le terminal d'utilisateur est concerné par la notification d'alerte.

6. Procédé selon l'une des revendications 1 à 5, **caractérisé en ce que** le procédé comprend en outre les étapes suivantes :
détection d'au moins une situation de danger pour au moins une zone de danger,
délivrance d'un avertissement avec des informations sur l'au moins une situation de danger à des systèmes de contrôle des systèmes de navigation par satellite,
insertion de l'avertissement sous la forme d'une notification d'alerte dans les signaux des satellites de navigation ou d'autres systèmes émetteurs des systèmes de navigation par satellite.

7. Procédé selon l'une des revendications 1 à 6, **caractérisé en ce que** l'envoi de l'au moins une notification d'alerte est effectué par des satellites de navigation et/ou d'autres systèmes émetteurs des systèmes de navigation par satellite.

8. Procédé selon la revendication 7, **caractérisé en ce que** quelques-uns ou la totalité des autres systèmes émetteurs des systèmes de navigation par satellite sont des pseudolites.

9. Procédé selon la revendication 7, **caractérisé en ce que** quelques-uns ou la totalité des systèmes émetteurs des systèmes de navigation par satellite sont des systèmes d'augmentation à assistance au sol et/ou spatiale ou des composants de tels systèmes d'augmentation.

10. Procédé selon l'une des revendications 2 à 9, **caractérisé en ce que** la décision du fait que le terminal d'utilisateur est concerné par la notification d'alerte est prise automatiquement.

11. Procédé selon l'une des revendications 2 à 9, **caractérisé en ce que** la décision du fait que le terminal d'utilisateur est concerné par la notification d'alerte n'est prise qu'après validation par un utilisateur.

12. Procédé selon l'une des revendications 2 à 11, **caractérisé en ce que** la position du terminal d'utilisateur est une position actuelle et/ou au moins une position future du terminal d'utilisateur.

13. Procédé selon la revendication 12, **caractérisé en ce que** l'au moins une position future est une position planifiée et/ou prévisionnelle.

14. Procédé selon l'une des revendications 1 à 13, **caractérisé en ce que** la notification d'alerte comprend au moins un identifiant de la notification d'alerte et des données pour décrire au moins une zone de danger.

15. Procédé selon la revendication 14, **caractérisé en ce que** la notification d'alerte comprend au moins un champ textuel libre, au moins un instant de validité, au moins un intervalle de temps de validité, au moins un identifiant d'activation pour des informations supplémentaires, au moins un identifiant d'activation pour les activités du terminal d'utilisateur et/ou au moins une information d'autorisation.

16. Système de navigation par satellite destiné à exécuter un service global d'information et d'alerte anticipée, comprenant
un premier dispositif pour envoyer au moins une notification d'alerte sur une ou plusieurs zones de danger par le système de navigation par satellite et
un terminal d'utilisateur comprenant
un premier dispositif pour recevoir au moins une notification d'alerte dans au moins une zone de couverture d'information de la part du système de navigation par satellite et
un deuxième dispositif pour contrôler l'au moins une notification d'alerte reçue pour vérifier si le terminal d'utilisateur est concerné par la notification d'alerte.
